# EUROPEAN PATENT APPLICATION

(11) **EP 4 495 494 A1**
(43) Date of publication of application: **22.01.2025**
(21) Application number: 23874082.3
(22) Date of filing: 22.05.2023
(51) Int. Cl.: F24F 5/00, F24F 7/06, F24D 11/00, F24D 19/10, D06F 58/20, F24S 20/66, F24S 70/60, E04C 1/39

(54) **HOT AIR CONTROL SYSTEM USING HEAT STORAGE FUNCTION OF SOLAR BLOCK**

(71) Applicant: Sehyun Engineering & Construction Co., Ltd., Changwon Gyeongsangnam-do 51391 (KR)
(72) Inventor: LIM, Ji Hoon, Changwon-si, Gyeongsangnam-do 51140 (KR)
(74) Representative: M. Zardi & Co S.A.
(86) International application number: PCT/KR2023/006933
(87) International publication number: WO 2024/242210

(57) **Abstract**

The present invention relates to the system for controlling heat air by using solar block of function of thermal storage. The system discloses a solar block that is part of the exterior wall of a building or placed on the outside of the exterior wall and stores solar radiant heat; a thermal storage wall part that introduces air outside the building, passes through the solar block, and introduces heated air into the building through heat exchange with the solar block; and a heat air circulation part that supplies heated air received from the thermal storage wall part to the inside of the building and uses it as an auxiliary heat source for heating, or selectively dries clothes in conjunction with a drying rack.

## Description

### TECHNICAL FIELD

The present invention relates to a system for controlling heat air by using solar block of function of thermal storage. More specifically, it is a technical field related to a solar block that can store thermal energy by receiving solar radiant heat, and a system that exchanges stored heat with outdoor air to heat the room and circulates heat air inside the building to dry and heat the room.

### BACKGROUND

As fossil fuels are rapidly depleted and environmental problems caused by energy production become more serious, interest in and research on new and renewable energy is actively taking place.

Renewable energy refers to energy used by converting existing fossil fuels or renewable energy including solar, water, geothermal heat, biological organisms, etc.

In Korea, in the 'Renewable Energy 3020 Implementation Plan' announced in 2017, the proportion of new and renewable energy compared to primary energy was set to reach 6.5% in 2020, 10.3% in 2025, and 14.3% in 2030. We are strongly pursuing a policy to use new and renewable energy, which will increase the proportion of new and renewable energy used in public buildings from 20% to 30% by 2030.

Among them, solar energy includes solar photovoltaic energy and solar thermal energy. Solar photovoltaic energy is a method of converting light energy from the sun, and solar thermal energy is a method of converting heat energy from the sun.

A lot of technology development and investment is being made in solar photovoltaic energy by large corporations, medium-sized companies, and small and medium-sized companies, but research, technology development, and commercialization of solar thermal energy are very low compared to solar photovoltaic energy, and energy production is also about 15 times less. Therefore, it is believed that developing solar thermal energy technology will broadly expand the renewable energy available from the infinite solar energy and help standardize the solar photovoltaic energy and solar thermal energy industries.

A typical solar thermal system consists of a collection part that acts as a thermal storage tank, a utilization part that effectively supplies solar heat stored in the heat dissipation tank, and a control part that effectively collects and stores solar heat and supplies it to the building while continuously monitoring the performance of the solar thermal system.

Solar thermal systems have the disadvantage that energy production is intermittent due to severe seasonal and hourly changes, and that it is difficult to provide stable energy supply for continuous demand. A way to compensate for this is to store solar energy through a certain storage medium and utilize it appropriately at night or when weather conditions are unfavorable.

As an example of related prior patent documents, there is "a heating block through solar heat reception and a heating wall system including the same" (Registration No. 10-1998222, hereinafter referred to as Patent Document 1).

According to the invention of Patent Document 1, the technical idea of a wall system that constructs a wall using a heating block and a set thereof and allows heated air to flow into the interior of a building through the wall is disclosed including a light transmitting plate part that transmits irradiated sunlight and forms a front surface; a light receiving plate part that absorbs and accumulates thermal energy of sunlight passing through the light transmitting plate part; a frame forming an outer structure; and a fastening part that securely attaches the light receiving plate part within the frame.

Another disclosed prior patent document is "a solar brick block for construction with a heat dust collection function (Registration No. 10-1710473, hereinafter referred to as Patent Document 2).

According to Patent Document 2, the invention relates to a solar brick block for construction with a heat dust collection function, which is equipped with a condensing lens and has a built-in solar cell that increases power generation efficiency, enabling solar power generation. It relates to a solar brick block for construction that can be used for heating or hot water generation by collecting the heat of sunlight shining on the brick. By installing a lens part with a convex lens on a brick and providing a solar cell inside the lens part, the power required for the building can be supplied through solar power generation from the brick. It is about an architectural solar brick block equipped with a heat dust collection function that is effective in creating a natural and beautiful brick house structure and finishing while maintaining the durability and strength of the brick.

Another disclosed prior patent document is "an indoor/outdoor brick composed of a solar collector and an LED module (Publication No. 20-2015-0001902, hereinafter referred to as Patent Document 3)."

According to Patent Document 3, the invention relates to an indoor/outdoor brick composed of a solar panel and an LED module, which is extremely easy to construct without being disturbed by the environment of the indoor or outdoor installation location. This brick is a solar panel that receives electrical energy from external solar heat to operate the LED module. It is largely composed of a circuit board with LEDs installed on the back of the solar panel and an LED module that operates on direct current power. A space in which the LED module is accommodated is formed on the solar panel and the circuit board, the LED module is accommodated on the bottom of the shell, and the upper surface of the circuit board is closed with a transparent protective cap that protects the received LED module and passes the light generated from the LED. It is about indoor and outdoor bricks composed of solar panels and LED modules that can provide LED lighting on indoor and outdoor floors or walls.

Another disclosed prior patent document includes "a solar power generation block, its installation device, and its manufacturing method (Publication No. 1 0-2017-0066178, hereinafter referred to as Patent Document 4)."

The invention according to Patent Document 4 relates to a solar power generation block, its installation device, and its manufacturing method. The present invention can prevent solar cell modules from being easily damaged even under strong impacts and accumulated loads due to the high-strength transparent resin reinforcement layer formed on the upper surface. The colored layer allows each component to be firmly combined and the sealing state of the solar cell module to be maintained, so it can generate a certain level of solar electricity while faithfully performing its function as a road block, and easily removes contamination from the upper surface. It relates to a solar power block having the characteristics of providing a method of manufacturing a solar power block, an installation device thereof, and a method of manufacturing the same.

In the case of Patent Document 2 and Patent Document 3, a certain amount of space is allocated to the exterior wall of a building, and technical ideas on solar energy utilization are disclosed.

However, in the case of the technology of Patent Document 2, it is a technology close to a solar power system that produces electricity by incorporating a condensing lens and solar cells, and because it indirectly uses the heat incident on the reflector of the solar cell lens, the efficiency of thermal energy use is reduced.

In the case of Patent Document 3, by embedding an LED module in a solar panel to emit light from the wall, there is an aspect that emphasizes the interior concept and no technical idea about natural heating of air through solar energy and natural flow of incoming air.

In the case of Patent Document 4, it is a technology close to a solar power system that produces a certain level of solar electricity while performing the function of a road block. As a solar power generation block that is easy to remove contamination from the top, there is no technical idea about natural heating of the air through solar energy and natural flow of incoming air.
(Patent Document 1) Registration No. 10-1998222
(Patent Document 2) Registration No. 10-1710473
(Patent Document 3) Publication No. 20-2015-0001902
(Patent Document 4) Publication No. 10-2017-0066178

### SUMMARY OF INVENTION

### PROBLEMS TO BE SOLVED

According to the present invention, a system for controlling heat air by using solar block of function of thermal storage was designed to solve the conventional problems described above, and presents the following problems to be solved.

First, it is intended to absorb radiant rays from the sun, convert them into thermal energy, and store heat inside the solar block of the building's exterior wall.

Second, it is intended to heat the air through direct heat exchange with the stored heat energy and circulates the heat air indoors by bringing in outside air.

Third, it is intended to circulate heated air and supply heat air to the interior of the building to dry clothes in conjunction with a drying rack and use it as an auxiliary heat source for heating.

The problems to be solved by the present invention are not limited to those mentioned above, and other problems not mentioned will be clearly understood by those skilled in the art from the description below.

### TECHNICAL SOLUTION

According to the present invention, the system for controlling heat air by using solar block of function of thermal storage has the following problem solving means for the above problem to be solved.

According to the present invention, the system comprises a solar block that is part of the exterior wall of a building or placed on the outside of the exterior wall and stores solar radiant heat; a thermal storage wall part that introduces air outside the building, passes through the solar block, and introduces heated air into the building through heat exchange with the solar block; and a heat air circulation part that supplies heated air received from the thermal storage wall part to the inside of the building and uses it as an auxiliary heat source for heating, or selectively dries clothes in conjunction with a drying rack.

According to the present invention, the system further comprises a light transmitting plate part that forms a front surface facing solar heat and transmits irradiated solar heat; a light receiving plate part disposed at the rear of the light transmitting plate part to absorb and store radiant heat energy of the sun passing through the light transmitting plate part; a frame forming an outer structure accommodating the light transmitting plate part and the light receiving plate part; a fastening part provided on the light receiving plate part and fixedly attaching the light receiving plate part within the frame; and a pair of ventilation plates that form the upper and lower surfaces of the solar block and form a plurality of openings to transfer the heat energy to the air drawn from the bottom and then flow to the top.

According to the present invention, the system further comprises a thermal storage block set part forming a collection of the solar thermal blocks and forming a part of the outer wall of the building; a filtering part disposed below the thermal storage block set part to filter external air of the building and introduce it into the thermal storage block set unit; a duct providing a conduit through which heated air flows through heat exchange in the thermal storage block set part; a plurality of block temperature sensing parts are disposed on the upper part of the thermal storage block set part and each measure the temperature of air flowing upward through the thermal storage block set unit; and a block control unit that divides the area of the thermal storage block set part into each area where the block temperature sensing part is placed, and then selectively introduces air into each area of the thermal storage block set part based on the temperature information measured by the block temperature sensing part.

According to the present invention, the system further comprises a block temperature information receiving part that receives the temperature information measured by the block temperature sensing unit; a sector selecting part that divides the thermal storage block set part into sectors for each area to which the block temperature sensing part is allocated, and allocates a physical address to each sector; and a block valve control unit that independently controls valves individually arranged for each virtual sector divided by the sector selecting part, based on the temperature information received by the block temperature information receiving part.

According to the present invention, the system further comprises a drying unit disposed on the outer wall of the building to remove moisture from the clothes and dry the clothes by receiving heated heat(warm) air accumulated from the thermal storage wall part in a buffer space connecting the outside and the inside of the building; a heating unit that is in contact with the buffer space and assists heating by introducing heated heat(warm) air accumulated from the heat storage wall into the internal space of the building; and a discharging unit connected to the heat storage wall and the duct and discharging a portion of the heated air to the outside.

According to the present invention, the system further comprises a drying pipe providing a conduit for flowing heated heat(warm) air through heat exchange in the thermal storage wall part to the buffer space; a drying air damper that controls the flow of heat air flowing through the drying pipe; a drying circulating part that introduces heat air that has passed through the drying pipe and the drying air damper into the buffer space to circulate the heat air in the buffer space; a drying temperature sensing part that measures the temperature of air flowing in the drying unit; a drying humidity sensing part that measures the humidity of air flowing in the drying unit; a drying timing part that controls opening and closing of the drying air damper according to time information; a drying air outlet installed to be connected to the bottom of the drying circulating part and evenly blowing out heat air for drying the clothes; and a drying hanger installed at the bottom of the drying air outlet and having a hanger shape capable of fixing a plurality of clothes for drying the clothes.

According to the present invention, the system further comprises a heating pipe providing a conduit through which heat air heated through heat exchange in the heat storage wall part flows into the interior space of the building; a heating air damper that controls the flow of heat air flowing through the heating pipe; a heating circulating part that introduces the heat air that has passed through the heating pipe and the heating air damper into the interior space of the building to circulate the heat air in the interior space of the building; a heating air suction part disposed next to the heating air damper and allowing heat to flow from the duct to the heating unit as the heating air damper opens and closes; a heating temperature sensing part that measures the temperature of air flowing in the heating unit; a heating humidity sensing part that measures humidity of air flowing in the heating unit; a heating timing part that controls the opening and closing of the heating air damper according to time information.

According to the present invention, the system further comprises a discharging pipe that provides a conduit for discharging a portion of the heat air heated through heat exchange in the heat storage wall part to the outside; a discharging air damper that controls the flow of air discharged through the discharging pipe; and a discharge vent hole that provides an outlet through which a portion of the heat air heated through heat exchange in the heat storage wall part is discharged to the outside.

According to the present invention, the system further comprises an inside control unit that selectively controls air intake and time for each area of the drying unit and the heating unit, and measures and checks the temperature and humidity for each area.

According to the present invention, the system further comprises a drying temperature information receiving part that receives temperature information of air entering the drying unit; a drying humidity information receiving part that receives humidity information of the buffer space; a drying air damper control unit part that controls the flow of air introduced through the drying pipe; a drying time control part that sets the opening and closing of the drying air damper according to time information; a heating temperature information receiving part that receives temperature information of air entering the heating unit; a heating humidity information receiving part that receives indoor humidity information of the building; a heating air damper control part that controls the flow of air introduced through the heating pipe; and a heating time control part that sets the opening and closing of the heating air damper according to time information.

### EFFECTS OF INVENTION

According to the present invention, system for controlling heat air by using solar block of function of thermal storage provides effects as follows.

First, as the solar block becomes the outer wall of the building itself, it provides the effect of performing the functions of heat collection and thermal storage at the same time.

Second, the air flowing into the solar block is heated through heat exchange, has a natural upward air current due to convection, and provides the effect of consuming only minimal energy to power the air flow.

Third, heated air received from the thermal storage wall part is circulated inside the building, providing the effect of smoothly drying clothes and reducing energy use as an auxiliary heat source for heating.

Fourth, it provides the effect of selectively controlling drying and heating based on temperature and humidity information measured through the temperature sensing part and the humidity sensing part.

The effect of the present invention is not limited thereto, and other effects unmentioned will be apparently considered by the skilled artisan as follows.

### BRIEF DESCRIPTION OF DRAWINGS

FIG.1 is a side cross-sectional view of a system for controlling heat air by using solar block of function of thermal storage according to an embodiment of the present invention.
FIG.2 is an exploded perspective view of a system for controlling heat air by using solar block of function of thermal storage according to another embodiment of the present invention.
FIG.3 is a front view of a thermal storage wall part of a system for controlling heat air by using solar block of function of thermal storage according to another embodiment of the present invention.
FIG.4 is a block diagram of a block control unit of a system for controlling heat air by using solar block of function of thermal storage according to another embodiment of the present invention.
FIG.5 is a cross-sectional diagram of a drying unit of a system for controlling heat air by using solar block of function of thermal storage according to another embodiment of the present invention.
FIG.6 is a cross-sectional diagram of a heating unit of a system for controlling heat air by using solar block of function of thermal storage according to another embodiment of the present invention.
FIG.7 is a perspective view of a discharging unit of a system for controlling heat air by using solar block of function of thermal storage according to another embodiment of the present invention.
FIG.8 is a block diagram of an inside control unit of a system for controlling heat air by using solar block of function of thermal storage according to another embodiment of the present invention.

### DETAILED DESCRIPTION

According to the present invention, the system for controlling heat air by using solar block of function of thermal storage can make various changes and have various embodiments, and specific embodiments will be illustrated in the drawings and described in detail in the detailed description. However, this is not intended to limit the present invention to specific embodiments, and should be understood to include all modifications, equivalents, or substitutes included in the technical spirit and scope of the present invention.

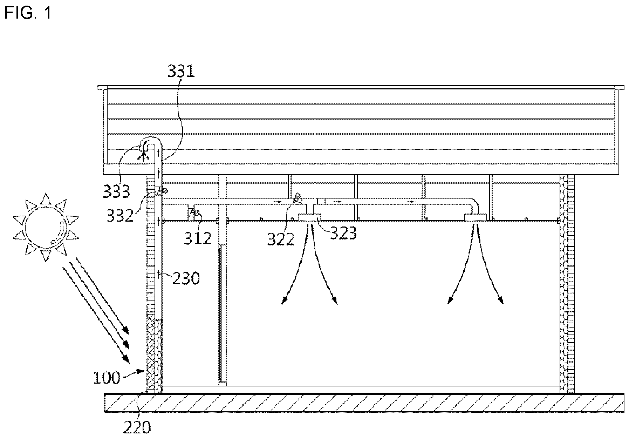

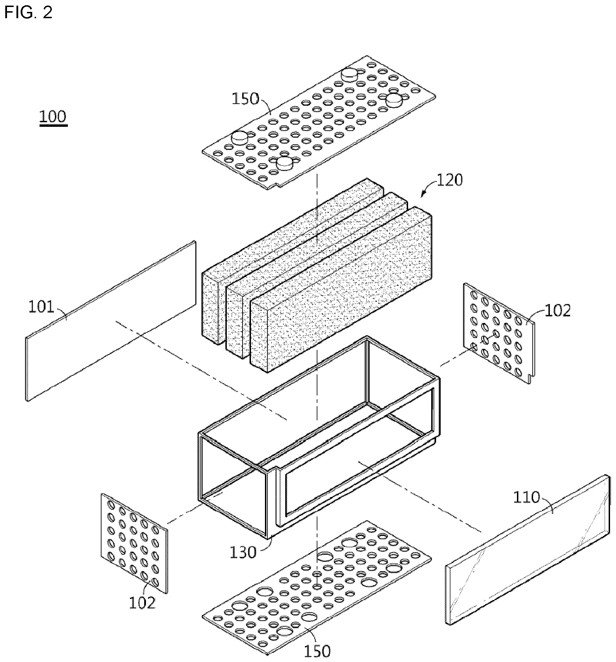

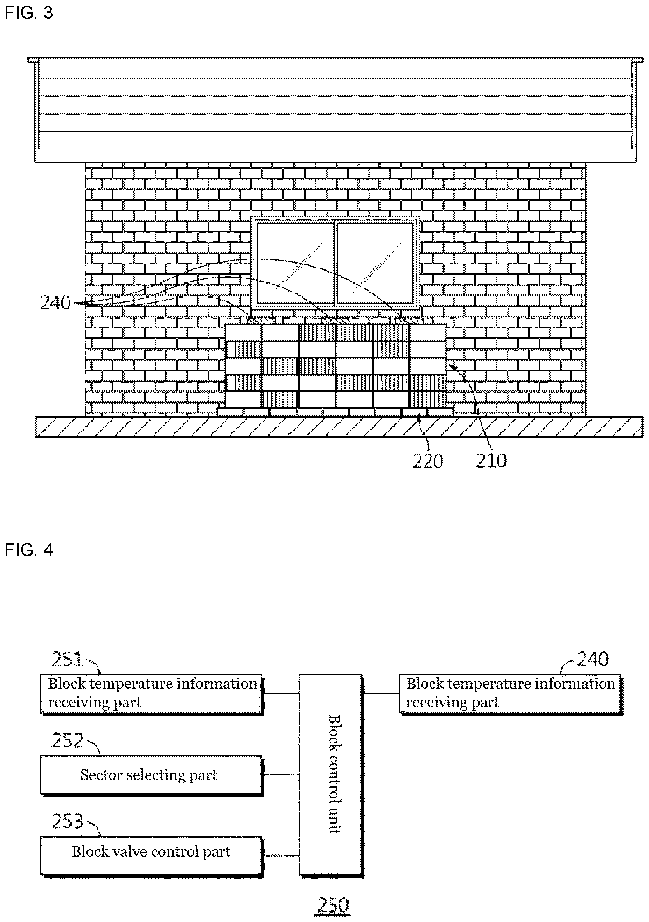

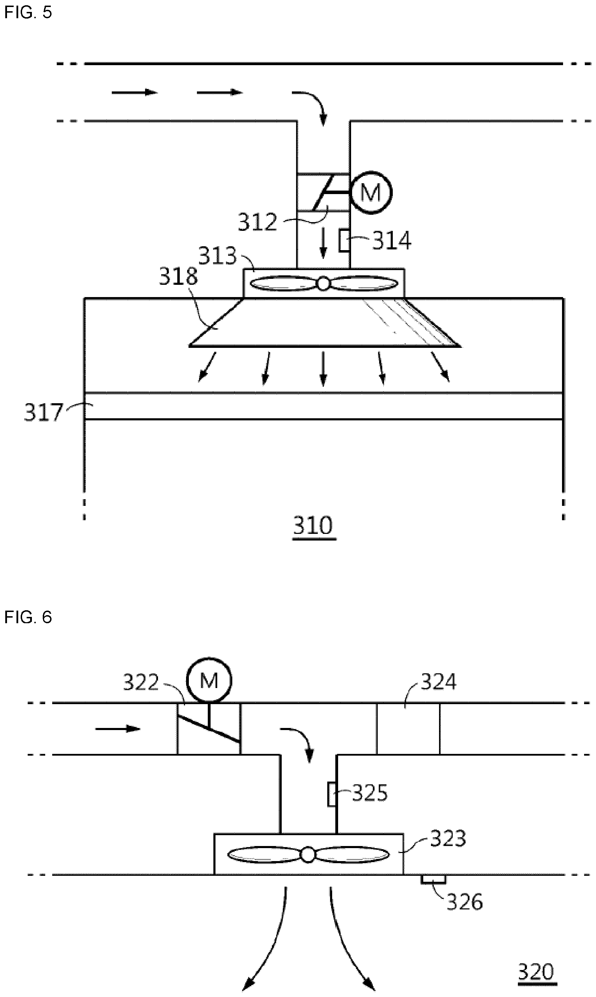

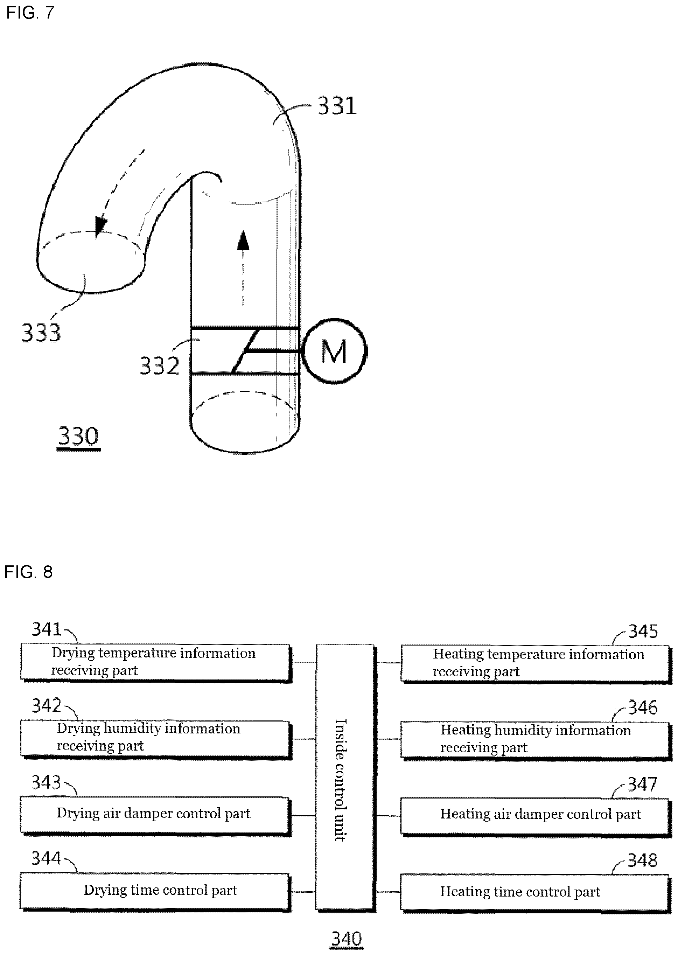

FIG.1 is a side cross-sectional view of a system for controlling heat air by using solar block of function of thermal storage according to an embodiment of the present invention. FIG.2 is an exploded perspective view of a system for controlling heat air by using solar block of function of thermal storage according to another embodiment of the present invention. FIG.3 is a front view of a thermal storage wall part of a system for controlling heat air by using solar block of function of thermal storage according to another embodiment of the present invention. FIG.4 is a block diagram of a block control unit of a system for controlling heat air by using solar block of function of thermal storage according to another embodiment of the present invention. FIG.5 is a cross-sectional diagram of a drying unit of a system for controlling heat air by using solar block of function of thermal storage according to another embodiment of the present invention. FIG.6 is a cross-sectional diagram of a heating unit of a system for controlling heat air by using solar block of function of thermal storage according to another embodiment of the present invention. FIG.7 is a perspective view of a discharging unit of a system for controlling heat air by using solar block of function of thermal storage according to another embodiment of the present invention.

FIG.8 is a block diagram of an inside control unit of a system for controlling heat air by using solar block of function of thermal storage according to another embodiment of the present invention.

According to the present invention, as shown in FIG.2, the solar block 100 forms one block and also corresponds to an individual component constituting an assembly called the thermal storage wall part 200 as shown in FIG.3.

In the case of the solar block 100 according to the present invention, each block receives solar heat, stores heat from the received solar radiation, heats the stored heat energy through heat exchange with the air flowing in from the bottom, and then flows upward.

The solar block 100 may be part of the exterior wall of a building, or may be an individual element constituting another wall placed outside the exterior wall.

The solar block 100 temporarily accommodates air introduced from the outside inside, and the received air is heated through heat exchange with stored heat energy as described above and then flows upward.

As shown in FIG.2, the solar block 100 includes a light transmitting plate part 110, a light receiving plate part 120, a frame 130, a fastening part 140, and a ventilation plate 150.

First, the light transmitting plate part 110 is arranged to face solar radiation and transmits irradiated solar radiation.

The light transmitting plate part 110 constitutes the front of the solar block 100, and corresponds to a hexahedron in the larger frame of the solar block 100, and is responsible for transmitting light through the front of the hexahedron.

The light transmitting plate part 110 is made of tempered glass or transparent reinforced plastic so that solar heat can sufficiently enter, and is the outer wall of the building itself, or when a plurality of them are placed on the outside of the outer wall, they must be able to withstand temperature changes due to annual or daily temperature differences in the four seasons.

The light receiving plate part 120 disposed at the rear of the light transmitting plate part 110, and when the sun passes through the light transmitting plate part 110, it receives the sun and absorbs and accumulates the received solar energy.

The light receiving plate part 120 must be made of a material that can efficiently absorb solar energy, such as dark brick, black granite, or dark plastic panel.

As shown in FIG.2, the light receiving plate part 120 is preferably shaped like a panel with one side having a large area. This light panel may have a large area facing the light transmitting plate part 110, or may be formed horizontally to the light transmitting plate part 110 in a large area.

As shown, it is preferable that a plurality of light receiving plate parts are disposed, including at least one panel-shaped unit.

As shown in FIG.2, when the large area of the panel of the light receiving plate part 120) is formed to face the light transmitting plate part 110, the panel closest to the light transmitting plate part 110 absorbs the most solar energy. The panel closest to the light transmitting plate part 110 not only cannot absorb all the light depending on the irradiation angle of the sun, but also absorbs and radiates solar heat at the same time. Therefore, the subsequent panel disposed on the back of the panel closest to the light transmitting plate part 110 is capable of absorbing and radiating the heat energy radiated by the panel closest to the light transmitting plate part 110 again depending on the irradiation angle of the sun.

When the large area of the panel of the light receiving plate part 120 is perpendicular to the light transmitting plate part 110, solar heat passing through the light transmitting plate part 110 is irradiated to the plurality of light receiving plate parts 120 formed vertically. In this case, the incident angle of the sun irradiating the plurality of panels of the light receiving plate part 120 is very large. However, since it is incident on several panels at the same time, the efficiency of heat energy absorbed and accumulated as a result was found to be not much different from the case where the large area of the panel of the light receiving plate part faces the light transmitting plate part 110.

In the case of the frame 130, as shown in FIG.2, it forms an outer structure that determines the overall shape of the solar block 100, and even when the solar block 100 is stacked up and down, the solar block 100 disposed at the bottom must be strong enough to withstand the entire load.

The fastening part 140 is a configuration that may include a fixing bolt and a nut. As shown, the light receiving plate part 120 must be fixedly attached based on the backup plate 101 or the side plate 102.

As shown in FIG.2, the ventilation plate 150 forms the upper and lower surfaces of the solar block 100, and a plurality of openings are formed in this plate.

The solar block 100 transfers the absorbed solar energy to the air in the process of flowing air introduced from the lower part to the upper part. To this end, the ventilation plate 150 of the solar block 100 serves to transfer heat energy to the air drawn from the bottom and then allow it to flow upward.

As shown in FIG.1 and FIG.3, the technical idea is to allow that the thermal storage wall part 200 according to the present invention constitutes a part of the outer wall of a building, or constitutes another outer wall disposed outside the outer wall to form a part of the building. Through this arrangement, by absorbing and accumulating solar heat irradiated on the exterior wall of the building, air flowing into the lower part of the building is passed through the solar block 100, and the heated air is introduced into the building through heat exchange with the solar block 100.

The thermal storage wall part 200 is part of the outer wall of the building or the building itself, and has a simple structure and uses an air heat source, so there is no concern about corrosion. Since it can be manufactured using only stone, iron, and glass, it is easy to supply materials and can be used permanently.

In addition, since the thermal storage wall part 200 does not require space such as a machine room or rooftop of a building, the architectural design is free and can be manufactured in various shapes.

As shown in FIG.1 and FIG.3, the thermal storage wall part 200 according to the present invention may include a thermal storage block set part 210, a filtering part 220, a duct 230, a block temperature sensing part 240, and a block control unit 250.

As shown in FIG.3, the thermal storage block set part 210 is a collection of the solar blocks 100 described above, and forms a single wall combined by stacking the solar blocks 100 up and down, and forms a wall of the building. It is either a replacement for the outer wall or forms another outer wall outside the outer wall of the building.

In the case of the filtering part 220, as shown in FIG.1 and FIG.3, it is located at the lower part of the thermal storage block set part 210, and is disposed on the lower part of the outer wall of the building to purify the outside air of the building and allow it to flow into the lower part of the heat storage block set part 210.

The filtering part 220 preferably includes a HEPA filter that can filter out fine dust or ultrafine dust. It is important to install a bucket that centrifuges the dust before using the HEPA filter to filter out large dust contained in the air and prevent the filtered dust from becoming an obstacle to the incoming air.

In the case of the duct 230, as shown, it includes a drive motor, and heated air from the duct 230 can be forced into the building through the driving force of the drive motor.

The block temperature sensing part 240 measures the temperature of air flowing vertically upward through a plurality of temperature sensors in each area of the thermal storage block set part 210.

The block control unit 250 controls the intake of air independently and selectively for each sector based on the temperature information measured for each sector where the plurality of temperature sensors constituting the block temperature sensing unit 240 are arranged. It compares each temperature information measured by the temperature sensor disposed in each sector to selectively allow only the air in the sector corresponding to the highest temperature to flow upward, or may allow only the air in the sector above a certain critical temperature(Tt) to selectively flow upward.

Here, the specific critical temperature(Tt) is a variable that can be arbitrarily set to maintain an appropriate indoor temperature.

This is because the exterior wall of a building may have different temperatures in each area due to differences in solar irradiation that may be generated by street trees, telephone poles, walls, and other facilities, or differential cooling of the exterior wall due to drafts, and among each sector. This is to ensure that only heat air can actually flow into the interior of the building.

As shown in FIG.4, the block control unit 250 according to the present invention may include a block temperature information receiving part 251, a sector select part 252, and a block valve control part 253.

The temperature information receiving part receives temperature information for each sector collected by the block temperature sensing part 240.

In the case of the sector select part 252, as described above in the thermal storage block set part 210, a separate physical address is assigned to each sector to which the block temperature sensing part 240 is assigned.

In the case of each sector of the thermal storage block set part 210 as described above, there is a valve that opens and closes the flow of air flowing from the bottom to the top through each sector, and the opening and closing of these valves is electronically controlled.

In the case of the block valve control part 253, valves individually installed and arranged in each virtual sector divided by the sector select part 252 are independently controlled based on the temperature information received by the temperature information receiving part.

The heat air circulation part 300 according to the present invention can supply heated air received from the thermal storage wall part 200 to the inside of the building and use it as an auxiliary heat source for heating, or can selectively dry clothes in conjunction with a drying rack.

The heat air circulation part 300 according to the present invention may include a drying unit 310, a heating unit 320, a discharging unit 330, and an inside control unit 340.

As shown in FIG.1 and FIG.5, the drying unit 310 can also be used to remove moisture from clothing and facilitate drying of clothing, which receives heated heat air accumulated from the thermal storage wall part 200 in the buffer space or balcony space connecting the exterior and interior of the building, and operates in conjunction with the drying rack in the buffer space or balcony space.

The drying unit 310 can be used for a variety of purposes, such as blowing heat air into a humid buffer space or balcony space due to rainy season in summer, etc. to facilitate drying of clothes.

As shown in FIG.5, the drying unit 310 of the present invention may include a drying pipe 311, a drying air damper 312, a drying circulating part 313, and a drying temperature sensing part 314, a drying humidity sensing part 315, a drying timing part 316, a drying air outlet 318, and a drying hanger 317.

The drying pipe 311 serves as a passage through which air is introduced into the drying unit 310, and serves as a conduit through which heat air heated through heat exchange in the thermal storage wall part 200 flows into the buffer space or balcony space. It is preferable to use a flexible pipe mainly made of aluminum as the drying pipe 311.

The drying air damper 312 controls the flow of heat air flowing in through the drying pipe 311 described above, controls the opening and closing of the drying air damper 312, and may include a function to automatically control heat air according to temperature or time information.

The drying circulating part 313 circulates the heat air that has passed through the drying pipe 311 and the drying air damper 312 deep into the buffer space or balcony space and helps clothes in the entire buffer space or balcony space to dry evenly.

The drying temperature sensing part 314 is installed at the bottom of the drying air damper 312 and measures the temperature of the heat air flowing into the drying unit 310.

The drying humidity sensing part 315 measures the humidity of the heat air circulating in the drying unit 310.

This means that if the humidity increases when drying clothes, mold and bacteria can grow, which can have negative effects on the health of asthma or allergy patients, so it is essential to check the humidity when drying clothes.

The drying timing part 316 can control the opening and closing of the drying air damper 312 by setting a timer according to time information.

The drying air outlet 318 is installed to be connected to the bottom of the drying circulating part 313, and heat air for drying clothes is evenly blown out to help air circulate evenly in the buffer space or balcony space.

As shown in FIG.5, the drying hanger 317 is installed at the bottom of the drying air outlet 318 and has a hanger shape capable of fixing a plurality of clothes for drying the clothes. It is sturdy and has little shaking so that it can be fixed and allows a lot of clothing to be hung in a small area.

As shown in FIG.1 and FIG.6, the heating unit 320 can be used to assist heating by introducing heated heat air accumulated from a thermal storage wall in contact with a buffer space or balcony into the internal space of the building.

In addition, the heating unit 320 has the effect of reducing heating costs by using heating as an auxiliary heat source by supplying heat to the inside of the building that was stored during the day in the cold season of winter, early spring, or late fall, or when heating is needed at night.

As shown in FIG.6, in the case of the heating unit 320 of the present invention may include the heating pipe 321, the heating air damper 322, the heating circulating part 323, the heating air suction part 324, and the heating temperature sensing part 325, a heating humidity sensing part 326, and a heating timing part 327.

The heating pipe 321 serves as a passage through which air is introduced into the heating unit 320, and provides a conduit through which heat air heated through heat exchange in the thermal storage wall part 200 flows into the internal space of the building. It is desirable to use a flexible pipe mainly made of aluminum as the heating pipe 321.

The heating air damper 322 may include a function to control the flow of heat air flowing in through the above-described heating pipe 321, to control the opening and closing of the heating air damper 322, and to automatically control heat air flowing into the interior according to temperature or time information.

The heating circulating part 323 circulates the heat air that has passed through the heating pipe 321 and the heating air damper 322 throughout the interior space of the building, helping to ensure even heating of the interior space.

The heating air suction part 324 is disposed next to the heating air damper 322 and forces heat air into the heating unit 320 from the duct 230 as the heating air damper 322 opens and closes.

In addition, the heating air suction part 324 serves to help the heating unit 320 because there is a distance difference between the heating unit 320 and the outer wall of the building, making it difficult to move to the heating unit 320 with a natural air flow.

The heating temperature sensing unit 325 is located at the top of the heating circulating unit 323 and measures the temperature of the heat air flowing into the heating unit 320.

The heating humidity sensing part 326 measures the humidity of the heat air circulating in the heating unit 320.

The heating timing part 327 can control the opening and closing of the heating air damper 322 by setting a timer according to time information.

As shown in FIG.7, the discharging unit 330 is connected to the heat storage wall part 200 and the duct 230, and serves to discharge a portion of the heated air to the outside.

Since indoor heating is unnecessary during the summer, the indoor heat air can be blocked and then the heat air can be released into the atmosphere through the discharging unit 330.

The discharging unit 330 is connected to the thermal storage wall part 200 and the duct 230, and provides a function of discharging part of the heated air to the outside.

As shown in Figure 7, the discharging unit 330 of the present invention may include a discharging pipe 331, a discharging air damper 332, and a discharging vent hole 333.

The discharging pipe 331 provides a conduit for discharging a portion of the heat air heated through heat exchange in the heat storage wall portion 200 to the outside.

The discharging air damper 332 controls the flow of air discharged through the discharging pipe 331 and controls the opening and closing of the discharging air damper 332.

The discharging vent hole 333 provides an outlet through which heat air heated through heat exchange in the thermal storage wall part 200 is discharged to the outside.

The inside control unit 340 selectively controls air intake and time for each area of the drying unit 310 and the heating unit 320, and measures and confirms the temperature and humidity for each area.

As shown in FIG.8, the inside control unit 340 of the present invention may include a drying temperature information receiving part 341, a drying humidity information receiving part 342, a drying air damper control part 343, a heating time control unit 344, a heating temperature information receiving part 345, a heating humidity information receiving part 346, a heating air damper control part 347, and a heating time control part 348.

The drying temperature information receiving part 341 receives temperature information of the heat air flowing into the drying unit 310 collected by the drying temperature sensing part 314.

The drying humidity information receiving part 342 receives humidity information of the heat air flowing into the drying unit 310 collected by the drying humidity sensing part 315.

The dry air damper control part 343 controls the opening and closing of the dry air damper 312, which controls the flow of air introduced through the drying pipe 311.

The drying time control part 344 sets the opening and closing of the drying air damper 312 according to time information.

The heating temperature information receiving part 345 receives temperature information of the heat air flowing into the heating unit 320 collected by the heating temperature sensing part 325.

The heating humidity information receiving part 346 receives humidity information of the heat air flowing into the heating unit 320 collected by the deheating humidity sensing part 326.

The heating air damper control part 347 controls the opening and closing of the heating air damper 322, which controls the flow of air introduced through the heating pipe 321.

The heating time control part 348 sets the opening and closing of the heating air damper 322 according to time information

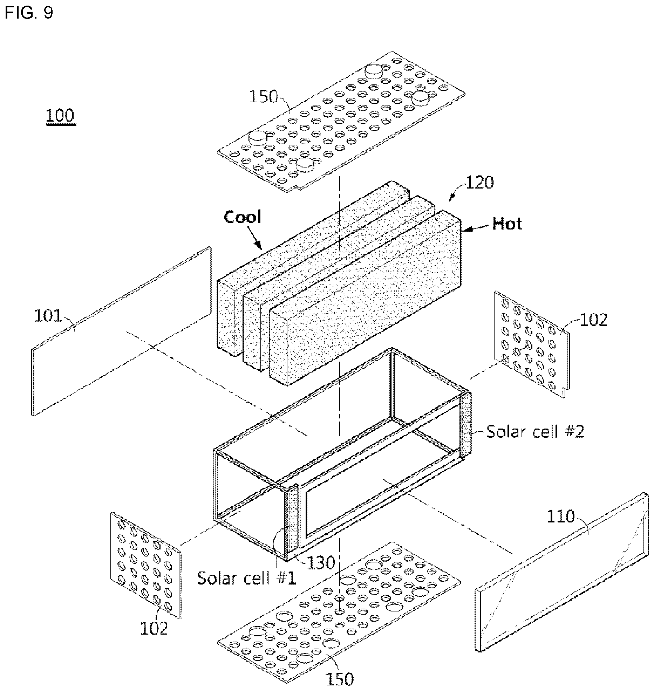

As shown in FIG.9, the heating degrees by sunlight of the front side one of the light receiving plate part 120 and the rear side one of light receiving plate part 120 heated are bound to be different. While the front side one is relatively hot, the rear side one remains relatively cold. The front side one of the light receiving plate part 120 continues to be heated by sunlight and the temperature does not rise. Rather, when heating is performed to a certain temperature, the degree of thermal storage and the trend of temperature increase decrease, which may be inefficient in terms of energy efficiency.

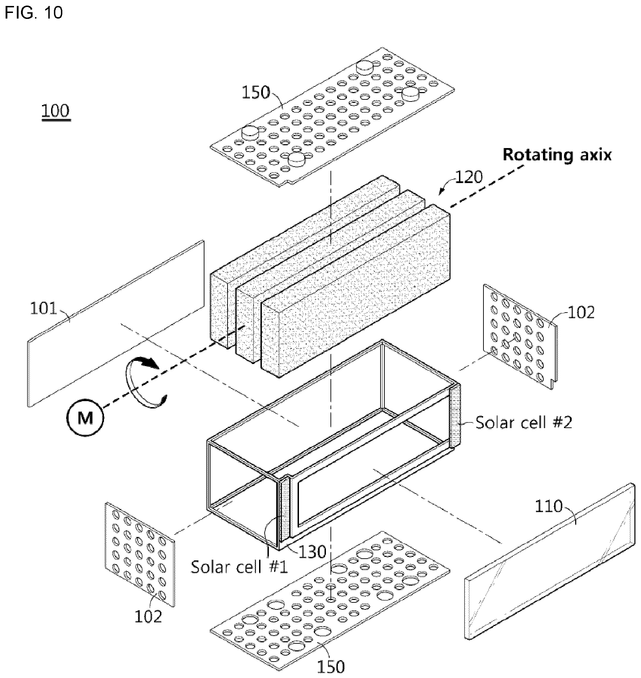

As shown in FIG.10, the light receiving plate part 120 may be provided with a rotation axis so that the front side and rear side ones can be heated alternately, and it is preferable to have a rotation motor(M) at either one end or the other end of this rotation axis. This rotation motor(M) rotates the light receiving plate part 120 while receiving light according to a preset rotation speed, so that the front side one of light receiving plate part 120 and the rear side one of light receiving plate part can be alternately heated.

The driving energy of the rotation motor(M) is sufficient to rotate this motor even with a small amount of energy, so it is placed in front of the frame 130 of the solar cells #1 and #2. The rotation motor(M) is driven through the generated energy of these solar cells #1 and #2. The power transmission line transmitted from solar cells #1 and #2 to the rotary motor(M) is omitted in the drawing.

The scope of the present invention is determined by the matters described in the claims, and parentheses used in the claims are not described for selective limitation, but are used for clear components, and descriptions in parentheses are also essential components should be interpreted as elements.

## Claims

1. a system for controlling heat air by using solar block of function of thermal storage comprises:
a solar block that is part of the exterior wall of a building or placed on the outside of the exterior wall and stores solar radiant heat;
a thermal storage wall part that introduces air outside the building, passes through the solar block, and introduces heated air into the building through heat exchange with the solar block; and
a heat air circulation part that supplies heated air received from the thermal storage wall part to the inside of the building and uses it as an auxiliary heat source for heating, or selectively dries clothes in conjunction with a drying rack.

2. The system for controlling heat air according to claim 1, wherein the solar block of the system for controlling heat air by using solar block of function of thermal storage includes:
a light transmitting plate part that forms a front surface facing solar heat and transmits irradiated solar heat;
a light receiving plate part disposed at the rear of the light transmitting plate part to absorb and store radiant heat energy of the sun passing through the light transmitting plate part;
a frame forming an outer structure accommodating the light transmitting plate part and the light receiving plate part;
a fastening part provided on the light receiving plate part and fixedly attaching the light receiving plate part within the frame; and
a pair of ventilation plates that form the upper and lower surfaces of the solar block and form a plurality of openings to transfer the heat energy to the air drawn from the bottom and then flow to the top.

3. The system for controlling heat air according to claim 1, wherein the thermal storage wall part of the system for controlling heat air by using solar block of function of thermal storage comprises:
a thermal storage block set part forming a collection of the solar thermal blocks and forming a part of the outer wall of the building;
a filtering part disposed below the thermal storage block set part to filter external air of the building and introduce it into the thermal storage block set unit;
a duct providing a conduit through which heated air flows through heat exchange in the thermal storage block set part;
a plurality of block temperature sensing parts are disposed on the upper part of the thermal storage block set part and each measure the temperature of air flowing upward through the thermal storage block set unit; and
a block control unit that divides the area of the thermal storage block set part into each area where the block temperature sensing part is placed, and then selectively introduces air into each area of the thermal storage block set part based on the temperature information measured by the block temperature sensing part.

4. The system for controlling heat air according to claim 3, wherein the block control unit of the system for controlling heat air by using solar block of function of thermal storage includes:
a block temperature information receiving part that receives the temperature information measured by the block temperature sensing unit;
a sector selecting part that divides the thermal storage block set part into sectors for each area to which the block temperature sensing part is allocated, and allocates a physical address to each sector; and
a block valve control unit that independently controls valves individually arranged for each virtual sector divided by the sector selecting part, based on the temperature information received by the block temperature information receiving part.

5. The system for controlling heat air according to claim 1, wherein the heat air circulation part of the system for controlling heat air by using solar block of function of thermal storage includes:
a drying unit disposed on the outer wall of the building to remove moisture from the clothes and dry the clothes by receiving heated heat(warm) air accumulated from the thermal storage wall part in a buffer space connecting the outside and the inside of the building;
a heating unit that is in contact with the buffer space and assists heating by introducing heated heat(warm) air accumulated from the heat storage wall into the internal space of the building; and
a discharging unit connected to the heat storage wall and the duct and discharging a portion of the heated air to the outside.

6. The system for controlling heat air according to claim 5, wherein the drying unit of the system for controlling heat air by using solar block of function of thermal storage comprises:
a drying pipe providing a conduit for flowing heated heat air through heat exchange in the thermal storage wall part to the buffer space;
a drying air damper that controls the flow of heat air flowing through the drying pipe;
a drying circulating part that introduces heat air that has passed through the drying pipe and the drying air damper into the buffer space to circulate the heat air in the buffer space;
a drying temperature sensing part that measures the temperature of air flowing in the drying unit;
a drying humidity sensing part that measures the humidity of air flowing in the drying unit;
a drying timing part that controls opening and closing of the drying air damper according to time information;
a drying air outlet installed to be connected to the bottom of the drying circulating part and evenly blowing out heat air for drying the clothes; and
a drying hanger installed at the bottom of the drying air outlet and having a hanger shape capable of fixing a plurality of clothes for drying the clothes.

7. The system for controlling heat air according to claim 5, wherein the heating unit of the system for controlling heat air by using solar block of function of thermal storage comprises:
a heating pipe providing a conduit through which heat air heated through heat exchange in the heat storage wall part flows into the interior space of the building;
a heating air damper that controls the flow of heat air flowing through the heating pipe;
a heating circulating part that introduces the heat air that has passed through the heating pipe and the heating air damper into the interior space of the building to circulate the heat air in the interior space of the building;
a heating air suction part disposed next to the heating air damper and allowing heat to flow from the duct to the heating unit as the heating air damper opens and closes;
a heating temperature sensing part that measures the temperature of air flowing in the heating unit;
a heating humidity sensing part that measures humidity of air flowing in the heating unit;
a heating timing part that controls the opening and closing of the heating air damper according to time information.

8. The system for controlling heat air according to claim 5, wherein the discharging unit of the system for controlling heat air by using solar block of function of thermal storage comprises:
a discharging pipe that provides a conduit for discharging a portion of the heat air heated through heat exchange in the heat storage wall part to the outside;
a discharging air damper that controls the flow of air discharged through the discharging pipe; and
a discharge vent hole that provides an outlet through which a portion of the heat air heated through heat exchange in the heat storage wall part is discharged to the outside.

9. The system for controlling heat air according to claim 5, the heat air circulation part of the system for controlling heat air by using solar block of function of thermal storage comprises: an inside control unit that selectively controls air intake and time for each area of the drying unit and the heating unit, and measures and checks the temperature and humidity for each area.

10. The system for controlling heat air according to claim 9, wherein the inside control unit of the system for controlling heat air by using solar block of function of thermal storage includes:
a drying temperature information receiving part that receives temperature information of air entering the drying unit;
a drying humidity information receiving part that receives humidity information of the buffer space;
a drying air damper control unit part that controls the flow of air introduced through the drying pipe;
a drying time control part that sets the opening and closing of the drying air damper according to time information;
a heating temperature information receiving part that receives temperature information of air entering the heating unit;
a heating humidity information receiving part that receives indoor humidity information of the building;
a heating air damper control part that controls the flow of air introduced through the heating pipe; and
a heating time control part that sets the opening and closing of the heating air damper according to time information.
